# EUROPÄISCHE PATENTANMELDUNG

(11) **EP 1 075 014 A2**
(43) Veröffentlichungstag der Anmeldung: **07.02.2001**
(21) Anmeldenummer: 00202273.9
(22) Anmeldetag: 29.06.2000
(51) Int. Cl.: H01J 47/02

(54) **Gaskammerdetektor mit Gas-Elektronenvervielfacher**

(30) Priorität: 08.07.1999 DE 19931772
(71) Anmelder: Philips Corporate Intellectual Property GmbH, 52064 Aachen (DE); Koninklijke Philips Electronics N.V., 5621 BA Eindhoven (NL)
(72) Erfinder: Proksa, Roland, 52064 Aachen (DE)
(74) Vertreter: Volmer, Georg, Dipl.-Ing.

(57) **Zusammenfassung**

Es wird ein Gaskammerdetektor mit einem Gas-Elektronenvervielfacher beschrieben, der insbesondere zur Erfassung von Röntgenstrahlen und zur Erzeugung von Röntgenbildern mit einem Computertomographen geeignet ist. Zu diesem Zweck ist eine Detektorstruktur (20) durch eine im wesentlichen zweidimensionale Anordnung einer Mehrzahl von Anodenpads (21) gebildet, deren Ausgangssignale zur Erfassung einer Strahlungsverteilung jeweils zugeordneten Auswerteschaltkreisen (30) zuführbar sind. Die Anodenpads werden durch eine CMOS-Struktur realisiert. Ein fokussierendes elektrisches Feld in der Driftkammer (18) ermöglicht eine Reduzierung der Detektorfläche gegenüber dem Elektronenvervielfacher und die Erzeugung gewünschter Projektionseigenschaften.

## Beschreibung

Die Erfindung betrifft einen Gaskammerdetektor mit einem Gas-Elektronenvervielfacher (GEM - Gas Electron Multiplier) und einer Driftkammer, in der mindestens eine Detektorstruktur zur Detektion von Elektronen angeordnet ist, insbesondere zur Erfassung von Röntgenstrahlen und zur Erzeugung eines Röntgenbildes mit einem Computertomographen.

Durch die jüngsten Entwicklungen auf dem Gebiet der Gaskammerdetektoren sind die Zählraten, mit denen die durch einen Strahlungseinfall in den Detektor erzeugten Elektronen gezählt werden können, wesentlich verbessert worden. Besonders interessant sind dabei die eingangs genannten Ausgestaltungen mit einem Gas-Elektronenvervielfacher, der einen wesentlichen Nachteil anderer Parallelplattenzähler, nämlich die Gefahr einer Funkenentladung, die insbesondere bei den empfindlichen Ausleseverstärkern zu Schäden führen kann, nicht aufweist. Dies wird durch eine Trennung des Bereiches, in dem die Elektronenvervielfachung stattfindet, von dem Driftbereich, in dem sich die Detektorstruktur befindet, erreicht. Die Detektorstruktur besteht dabei im allgemeinen aus mehreren orthogonal angeordneten Mikrostreifen, an denen ein Elektroneneinfall gemessen werden kann. Der Aufbau und die Funktion eines Gas-Elektronenvervielfachers sowie anderer Parallelplattenzähler sind zum Beispiel in einem Artikel von F. Sauli, "Gas Detectors: Recent Developments and Future Perspectives", CERN-EP/98-51 vom 26. März 1998 beschrieben.

An einen Gas-Elektronenvervielfacher können zur Erzeugung von sekundären Elektronen mittels des Lawineneffektes elektrische Feldstärken von etwa 20 bis 100 kV/cm angelegt werden. Aufgrund der relativ hohen Rekombinationsrate der Ionen sind damit Zählraten von mehr als 10⁹/mm² /sec erzielt worden. Diese Leistungsfähigkeit eröffnet die prinzipielle Möglichkeit der Anwendung von Gaskammerdetektoren mit einem Gas-Elektronen-vervielfacher auf dem Gebiet der Computertomographie, wobei allerdings mit den bekannten Mikrostreifen-Detektorstrukturen eine zur Erzeugung von Röntgenbildern erforderliche Auflösung nicht erreicht werden kann.

Die wesentliche Aufgabe, die der Erfindung zugrundeliegt, besteht deshalb darin, einen Gaskammerdetektor der eingangs genannten Art zu schaffen, mit dem eine Strahlungsintensität in einer zur Erzeugung von Röntgenbildern geeigneten Weise erfaßt werden kann, und der insbesondere zur Anwendung in einem Computertomographen geeignet ist.

Gelöst wird diese Aufgabe gemäß Anspruch 1 mit einem Gaskammerdetektor der eingangs genannten Art, der sich dadurch auszeichnet, daß die Detektorstruktur durch eine im wesentlichen zweidimensionale Anordnung einer Mehrzahl von Anodenpads gebildet ist, die zur Auswertung der durch die eingefallenen Elektronen erzeugten Ausgangssignale mit zugeordneten Verstärker- oder Auswerteschaltkreisen verbunden sind.

Unter Anodenpads sind in diesem Zusammenhang einzelne Anodenelemente in Form von Plättchen zu verstehen, die im wesentlichen punktförmig (wie zum Beispiel quadratisch, rechteckig, rund, oval usw.) und elektrisch voneinander isoliert sind, so daß ihre jeweiligen, durch eingefallene Elektronen erzeugten Ausgangssignale getrennt auswertbar sind.

Diese Lösung hat den Vorteil, daß durch entsprechende Wahl der Größe, Anzahl und Anordnung bzw. Dichte der Anodenpads ein an die spezifischen Anforderungen und die gewünschte Bildauflösung jeweils optimal angepaßter Detektor geschaffen werden kann.

Die Unteransprüche haben vorteilhafte Weiterbildungen der Erfindung zum Inhalt.

Insbesondere bei einer größeren Anzahl von Anodenpads sind die Ausführungsformen gemäß den Ansprüchen 2 und 3 vorteilhaft.

Zur weiteren Verbesserung der Abbildungseigenschaften empfiehlt sich die Maßnahme gemäß Anspruch 4, während zur Einsparung von Kosten im Hinblick auf die relativ teure CMOS-Struktur die Maßnahme gemäß Anspruch 5 vorteilhaft ist.

Zur Erzielung bestimmter Projektionseigenschaften des erfindungsgemäßen Gaskammerdetektors sind schließlich die Ausführungen gemäß den Ansprüchen 7 und 8 in entsprechender Kombination mit Anspruch 6 vorteilhaft.

Weitere Einzelheiten, Merkmale und Vorteile der Erfindung ergeben sich aus der folgenden Beschreibung einer bevorzugten Ausführungsform anhand der Zeichnungen. Es zeigt:
Fig. 1 eine schematische Darstellung wesentlicher Komponenten eines Computertomographen;
Fig. 2 einen schematischen Querschnitt durch einen erfindungsgemäßen Gaskammerdetektor;
Fig. 3 einen schematischen Querschnitt durch einen Teil eines Gas-Elektronenvervielfachers; und
Fig. 4 eine schematische Darstellung mehrerer erfindungsgemäßer Detektorstrukturen.

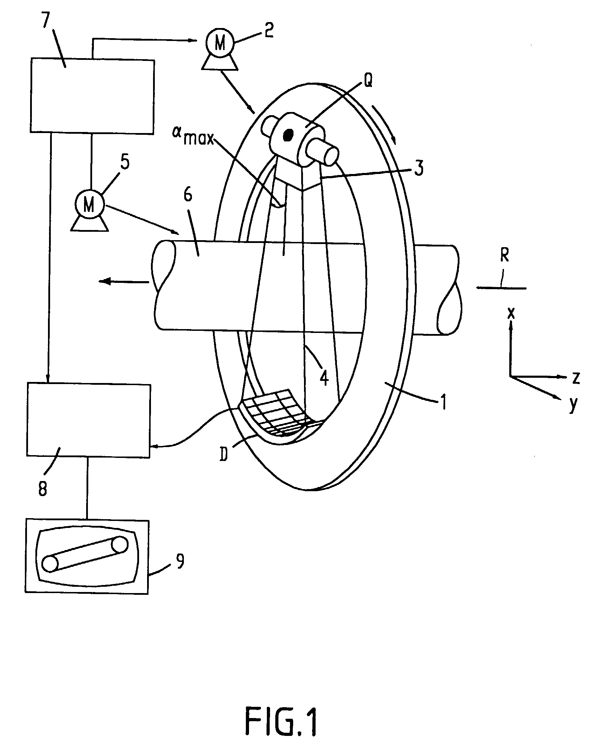

Figur 1 zeigt die wesentlichen Komponeneten eines Computertomographen, nämlich eine Gantry 1 mit Strahlenquelle Q und Detektoreinheit D, einem ersten und einem zweiten Motor 2, 5, einer Bildverarbeitungseinheit 8, einem Monitor 9 und einer Steuereinheit 7.

Die Gantry 1 kann um eine parallel zur z-Richtung des in Figur 1 dargestellten Koordinatensystems verlaufende Rotationsachse R gedreht werden. Zu diesem Zweck wird die Gantry 1 von dem ersten Motor 2 mit einer vorzugsweise konstanten, jedoch einstellbaren Winkelgeschwindigkeit angetrieben. An der Gantry 1 ist die Strahlenquelle Q wie zum Beispiel ein Röntgenstrahler befestigt, der mit einer Kollimatoranordnung 3 versehen ist, die aus der von der Strahlenquelle Q erzeugten Strahlung ein kegelförmiges Strahlenbündel 4 ausblendet. Dieses Strahlenbündel hat sowohl in der z-Richtung, als auch in einer dazu senkrechten Richtung (das heißt in einer zur Rotationsachse senkrechten Ebene) eine von Null verschiedene, endliche Ausdehnung.

Das Strahlenbündel 4 durchdringt einen Untersuchungsbereich 6, in dem sich ein Patient auf einem entsprechenden Tisch (nicht dargestellt) befinden kann. Der Untersuchungsbereich 6 hat die Form eines Zylinders, der im folgenden als Objektzylinder 6 bezeichnet wird. Nach dem Durchsetzen des Objektzylinders 6 trifft das Röntgenstrahlenbündel 4 auf die an der Gantry 1 befestigte zweidimensionale Detektoreinheit D, die eine Anzahl von Detektorzeilen mit jeweils einer Vielzahl von Detektorelementen umfaßt. Die Detektorzeilen befinden sich in zur Rotationsachse R senkrechten Ebenen auf einem Kreisbogen um die Strahlenquelle Q; sie können jedoch auch einen Kreisbogen um die Rotationsachse R beschreiben oder geradlinig sein. Jedes Detektorelement liefert in jeder Strahlenquellenposition einen Meßwert für einen Strahl aus dem Strahlenbündel 4.

Der Objektzylinder 6 kann mittels des zweiten Motors 5 parallel zur Rotationsachse R verschoben werden. Die Geschwindigkeit dieses Vorschubs ist vorzugsweise konstant und einstellbar. Wenn der erste und der zweite Motor 2, 5 gleichzeitig laufen, ergibt sich eine helixförmige Abtastbewegung der Strahlenquelle Q und der Detektorseinheit D. Wenn hingegen nur der erste Motor 2 die Gantry 1 rotieren läßt und der zweite Motor 5 stillsteht, ergibt sich eine kreisförmige Abtastbewegung der Strahlenquelle Q und der Detektoreinheit D relativ zu dem Untersuchungsbereich.

Die von der Detektoreinheit D akquirierten Meßdaten werden dem Bildverarbeitungsrechner 8 zugeführt, der daraus die Absorptionsverteilung in einem Teil des Untersuchungsbereiches 6 rekonstruiert und zum Beispiel auf dem Monitor 9 wiedergibt. Der erste und der zweite Motor 2, 5, der Bildverarbeitungsrechner 8, die Strahlenquelle Q und die Übertragung der Meßdaten von der Detektoreinheit D zu dem Bildverarbeitungsrechner 8 wird von der Steuereinheit 7 gesteuert.

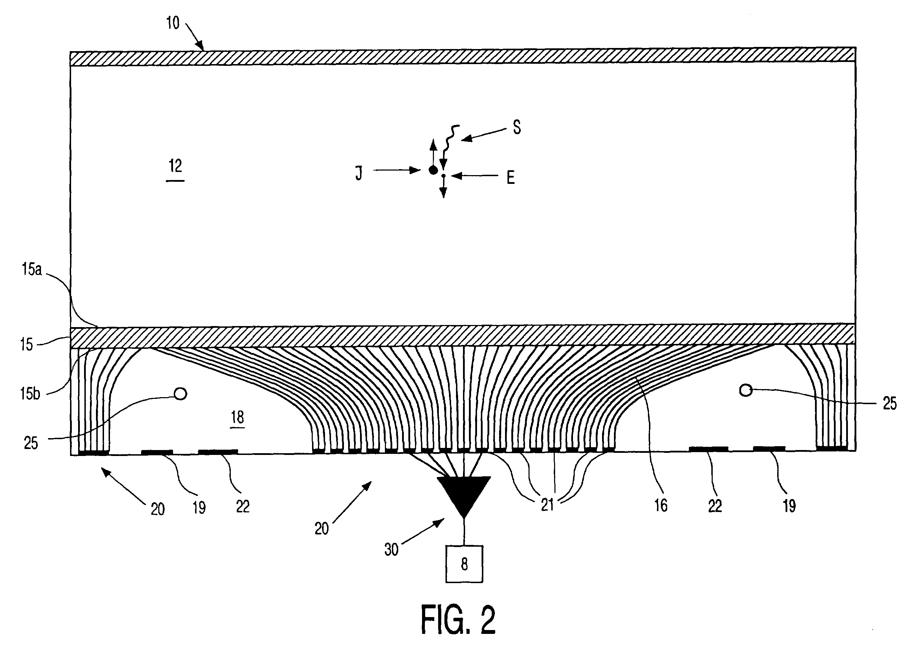

Ein erfindungsgemäßer Gaskammerdetektor umfaßt gemäß Figur 2 ein Eintrittsfenster 10 für die zu messende Strahlung, eine Detektorstruktur 20 zur Erfassung von Elektronen, sowie einen dazwischen liegenden Gas-Elektronenvervielfacher (GEM) 15. Die Ebenen, in denen sich diese drei Einheiten befinden, liegen im wesentlichen parallel zueinander. Zwischen dem Eintrittsfenster 10 und dem Gas-Elektronenvervielfacher 15 wird eine Konversionskammer 12 abgegrenzt, die ein durch die zu detektierende Strahlung ionisierbares Gas enthält, während sich zwischen dem Gas-Elektronenvervielfacher 15 und der Detektorstruktur 20 eine Driftkammer 18 befindet. Der Gas-Elektronenvervielfacher 15 weist eine erste (obere) und einer zweite (untere) Schicht 15a, 15b auf. Durch Anlegen eines negativen Potentials an das Eintrittsfenster 10 bzw. eines demgegenüber positiven Potentials an die erste Schicht 15a wird in der Konversionskammer 12 ein elektrisches Feld erzeugt. Zur Erzeugung eines elektrischen Feldes in der Driftkammer kann an die Detektorstruktur 20 ein gegenüber der zweiten Schicht 15b des Gas-Elektronenvervielfachers 15 positives Potential angelegt werden.

Die Detektorstruktur 20 besteht aus einer zweidimensionalen Anordnung einer Mehrzahl von einzelnen Anodenpads 21, die jeweils ein Detektorelement darstellen und elektrisch mit vorzugsweise jeweils einem zugeordneten Verstärker- und Auswerteschaltkreis 30 verbunden sind. In der Ebene der Detektorstruktur 20 befinden sich ferner eine oder mehrere negativ aufladbare erste Fokussierelektroden 22, durch die der Feldverlauf und damit die Flugbahnen 16 der Elektronen in der Driftkammer 18 beeinflußt werden können, sowie weiterhin positiv aufladbare Elektroden 19, mit denen Elektronen eingefangen werden können, die nicht auf die Anodenpads 21 auftreffen. Zur Beeinflussung des Feldverlaufes können darüberhinaus zweite Fokussierelektroden in Form von in der Driftkammer gespannten Drähten 25 vorgesehen sein, an denen ein entsprechendes negatives Potential anliegt. µ

Die durch das Eintrittsfenster 10 eingetretene Strahlung S wirkt auf die Gasmoleküle ein und ionisiert diese. In Abhängigkeit von der Strahlungsintensität wird eine entsprechende Anzahl von Ionen/Elektron-Paaren I/E erzeugt. Die Ionen werden in Richtung auf das Eintrittsfenster 10 beschleunigt, während die Elektronen in Richtung auf den Gas-Elektronenvervielfacher 15 wandern und in die erste Schicht 15a eintreten.

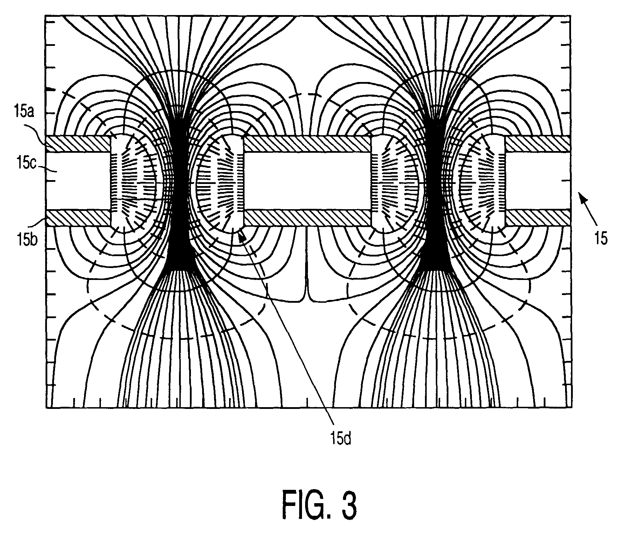

Figur 3 zeigt einen Querschnitt durch einen Teil eines solchen Gas-Elektronenvervielfachers 15. Die erste und die zweite Schicht 15a, 15b ist jeweils eine Metallschicht oder eine Metall-Beschichtung, die sich auf einer Kunststofffolie 15c (zum Beispiel Polymerfolie) befindet. Diese Schichtstruktur weist eine Vielzahl von Durchgangslöchern 15d auf, die zum Beispiel einen Durchmesser von jeweils 70 µm und einen Abstand von 140 µm haben. An die erste und zweite Schicht 15a, 15b wird eine Spannung angelegt, so daß in den Durchgangslöchern 15d ein elektrisches Feld mit einer sehr hohen Feldstärke von zum Beispiel 100 kV/cm erzeugt wird.

Die in der Konversionskammer 12 durch den Strahlungseinfall erzeugten und zu dem Gas-Elektronenvervielfacher 15 gewanderten Elektronen treten in die Durchgangslöcher 15d ein und werden dort durch das hohe elektrische Feld so stark beschleunigt, daß sekundäre Elektronen erzeugt werden, die in Form von Elektronenwolken aus dem Vervielfacher austreten und in die Driftkammer 18 gelangen. Der Multiplikationsfaktor kann dabei im Bereich von 10⁵ liegen. Mit dem auf diese Weise ausgelösten Lawineneffekt wird in bekannter Weise eine Signalverstärkung hervorgerufen.

Gemäß Figur 2 treten die entstandenen Elektronenwolken aus der zweiten Schicht 15b aus, gelangen in die Driftkammer 18 und wandern schließlich zu den Anodenpads 21, in denen die Elektronen durch Aufprall Stromstöße erzeugen. Zur Detektion dieser Ströme ist jeweils ein Verstärker- und Auswerteschaltkreis 30 vorgesehen, deren Ausgangssignale als Meßdaten dem Bildverarbeitungsrechner 8 zur Erzeugung und Wiedergabe eines Röntgenbildes auf dem Monitor 9 (Figur 1) zugeführt werden.

Wie in Figur 2 zu erkennen ist, erstreckt sich die Detektorstruktur 20 über eine im Vergleich zu der Fläche des Gas-Elektronenvervielfachers 15 wesentlich kleinere Fläche, und die Flugbahnen 16 der Elektronen sind auf diese Fläche fokussiert. Dies wird durch das in der Driftkammer 18 durch die ersten und zweiten Fokussierelektroden 22, 25 erzeugte elektrische Feld erreicht.

Neben einer solchen einfachen Fokussierung der Elektronenwolken auf die Anodenpads 21 ist es darüberhinaus auch möglich, durch Anlegen verschiedener Spannungen an die Fokussierelektroden 22, 25 und eine geeignete Verteilung dieser Elektroden in der Driftkammer 18 in entsprechender Abstimmung mit den Anodenpads 21 verschiedene Projektionen des Eintrittsfenster 10 und damit der Strahlungsverteilung entlang dieses Fenster auf die Anordnung von Anodenpads 21 zu erzielen. Diese Projektion kann linear oder nichtlinear sein und auch dynamisch erfolgen, um die Projektion zum Beispiel an bestimmte Umgebungs- oder Einsatzbedingungen anpassen bzw. einstellen zu können. Die Projektion kann in einer Ebene oder in zwei zueinander senkrechten Ebenen verändert werden, um zum Beispiel die Empfindlichkeit des Gaskammerdetektors entlang des Eintrittsfensters 10 in Richtung auf seinen Rand zu verringern.

Bei einer großen Anzahl und Dichte der Anodenpads 21 werden diese vorzugsweise mit einer integrierten CMOS-Struktur realisiert, die sich zum Beispiel auf der Oberfläche eines integrierten CMOS-Schaltungschips befinden kann, der die Verstärker- und Auswerteschaltkreise 30 enthält. Zu diesem Zweck wird auf eine Oberfläche des Chips eine zusätzliche SiO2-Schicht aufgebracht. Diese trägt eine Aluminium-Schicht, die entsprechend der einzelnen Anodenpads strukturiert ist, wobei jedes Anodenpad jeweils mit einem Verstärker- und Auswerteschaltkreis in den darunterliegenden Schichrstrukturen (SiO2/Al-Schich-ten) des Schaltungschips verbunden ist

Da eine CMOS-Struktur relativ kostenaufwendig ist, hat eine Verkleinerung der Anodenpads-Anordnung in Kombination mit der oben beschriebenen Fokussiereinrichtung besondere wirtschaftliche Vorteile.

In technischer Hinsicht ergeben sich bei einer Realisierung der Anodenpads durch die CMOS-Struktur insbesondere für die Anwendung in einer Detekroreinheit D für einen Computertomographen dadurch besondere Vorteile, daß die Anodenpads mit sehr hoher Dichte auf einer relativ kleinen Fläche erzeugt werden können und dadurch die Zählraten an einem einzelnen Anodenpad trotz der bei der Tomographie sehr hohen Photonenraten nicht zu hoch werden. Eine typische Detektorstruktur 20 hat für diese Anwendung zum Beispiel eine im wesentlichen quadratische Fläche von etwa 1 mm², auf der sich 100 x 100 Anodenpads 21 in Form von quadratischen Plättchen mit einer Kantenlänge von etwa 10 µm befinden. Das Eintrittsfenster 10 kann demgegenüber eine Fläche von etwa 1 cm² aufweisen.

Die Ausgangssignale der Anodenpads 21 werden in den Verstärker- und Auswerteschaltungen 30 vorzugsweise durch eine Zähldetektion ausgewertet, die gegenüber einer Schwankung dieser Signale und anderen Einflüssen, die die Detektion beeinträchtigen können, relativ unempfindlich ist. Ferner sind Zähler relativ einfach zu realisieren, da hierzu ein Verstärker und ein Diskriminator ausreicht.

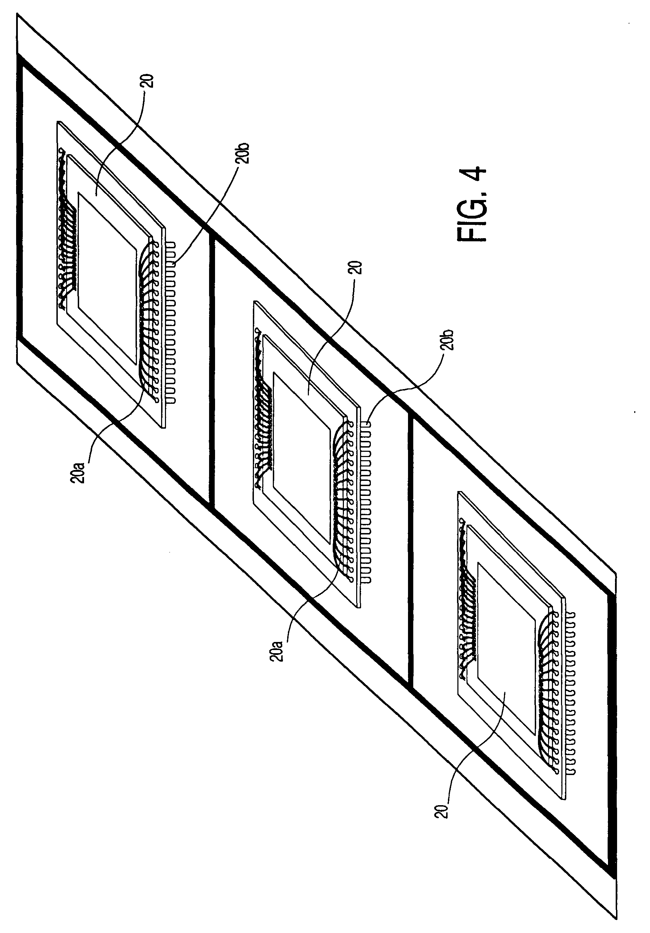

Figur 4 zeigt schließlich schematisch eine Draufsicht auf drei Detektorstrukturen 20 eines erfindungsgemäßen Gaskammerdetektors, der in dieser Form - oder um weitere Detektorstrukturen 20 verlängert - als Detektorzeile oder -spalte der in Figur 1 gezeigten Detektoreinheit D dienen kann. Der Gas-Elektronenvervielfacher 15 sowie das Eintrittsfenster 10 sind in dieser Darstellung nicht gezeigt. Jede Detektorstruktur 20 bildet, wie im Zusammenhang mit Figur 2 beschrieben wurde, die Oberseite eines integrierten CMOS-Schaltungschips (nicht dargestellt), der die Verstärker- und Auswerteschaltkreise für die Signale der Anodenpads 21 enthält. Die Ausgangssignale, d.h. die Meßdaten der Schaltungschips werden über Anschlußdrähte 20a und Stifte 20b dem Bildverarbeitungsrechner 8 (siehe Figur 1) zugeführt

## Patentansprüche

1. Gaskammerdetektor mit einem Gas-Elektronenvervielfacher und einer Driftkammer, in der mindestens eine Detektorstruktur zur Detektion von Elektronen angeordnet ist,
dadurch gekennzeichnet,
dass die Detektorstruktur (20) durch eine im wesentlichen zweidimensionale Anordnung einer Mehrzahl von Anodenpads (21) gebildet ist, die zur Auswertung der durch die eingefallenen Elektronen erzeugten Ausgangssignale jeweils mit zugeordneten Verstärker- oder Auswerteschaltkreisen (30) verbunden sind.

2. Gaskammerdetektor nach Anspruch 1,
dadurch gekennzeichnet,
dass die Anordnung von Anodenpads (21) auf einem integrierten CMOS-Schaltungschip ausgebildet ist, der die Verstärker- oder Auswerteschaltkreise (30) enthält.

3. Gaskammerdetektor nach Anspruch 2,
dadurch gekennzeichnet,
dass die Anordnung von Anodenpads (21) durch eine strukturierte Al-Schicht gebildet ist, die auf einer auf einer Oberflache des CMOS-Schaltungschips aufgebrachten SiO2-Schicht angeordnet ist.

4. Gaskammerdetektor nach Anspruch 1,
gekennzeichnet durch mindestens eine Einrichtung (22, 25) zur Fokussierung von in die Driftkammer eintretenden Elektronen auf die Anordnung von Anodenpads (21).

5. Gaskammerdetektor nach Anspruch 4,
dadurch gekennzeichnet,
dass sich die Anordnung von Anodenpads (21) über eine im Vergleich zu einer Austrittsfläche des Gas-Elektronenvervielfachers (15) reduzierte Fläche erstreckt.

6. Gaskammerdetektor nach Anspruch 4,
dadurch gekennzeichnet,
dass die Fokussiereinrichtung eine Mehrzahl von Fokussierelektroden (22, 25) und mindestens eine damit verbundene Spannungsquelle zur Erzeugung eines elektrischen Feldes in der Driftkammer (18) aufweist.

7. Gaskammerdetektor nach Anspruch 6,
dadurch gekennzeichnet,
dass die mindestens eine Spannungsquelle in der Weise steuerbar ist, daß mittels des elektrischen Feldes eine gewünschte lineare oder nichtlineare Projektion einer Strahlungsverteilung an einem Eintrittsfenster (10) des Gaskammerdetektors auf die Anordnung von Anodenpads (21) erzielbar ist.

8. Gaskammerdetektor nach Anspruch 6,
dadurch gekennzeichnet,
dass die mindestens eine Spannungsquelle in der Weise steuerbar ist, daß das elektrische Feld (16) dynamisch veränderbar ist.

9. Detektoreinheit mit mindestens einem Gaskammerdetektor nach Anspruch 1, zur Detektion von Röntgenstrahlung und zur Anwendung in einem Computertomographen zur Erzeugung eines Röntgenbildes.

10. Computertomograph mit einer Detektoreinheit (D) nach Anspruch 9.
